# FASCICULE DE BREVET EUROPEEN

(11) **EP 3 515 869 B1**
(45) Date de publication et mention de la délivrance du brevet: **23.10.2024**
(21) Numéro de dépôt: 17777311.6
(22) Date de dépôt: 14.09.2017
(51) Int. Cl.: C03B 27/04, C03C 17/32, C03C 17/38, C03C 17/42, C03C 17/36, C03C 23/00

(54) **PROCÉDÉ DE FABRICATION D'UN SUBSTRAT VERRIER TREMPÉ A IRIDESCENCE REDUITE**
VERFAHREN ZUR HERSTELLUNG EINES GEHÄRTETEN GLASSUBSTRATS MIT REDUZIERTEM IRISIEREN
PROCESS OF MANUFACTURING A TEMPERED GLASS SUBSTRATE WITH REDUCED IRIDESCENCE

(30) Priorité: 19.09.2016 FR 1658748
(43) Date de publication de la demande: 31.07.2019
(73) Titulaire: SAINT-GOBAIN GLASS FRANCE, 92400 Courbevoie (FR)
(72) Inventeur: KAMINSKI, Guillaume, 4020 Linz (AT); GUIRAUD, François, 60610 La Croix saint Ouen (FR); DECOURCELLE, Romain, 60280 Margny les Compiègne (FR)
(74) Mandataire: Saint-Gobain Recherche
(86) Numéro de dépôt international: PCT/FR2017/052461
(87) Numéro de publication internationale: WO 2018/051029

(56) Documents cités:
- EP-A1- 2 803 646
- US-A1- 2008 302 462
- US-A1- 2010 064 728
- US-A1- 2016 194 516
- US-B1- 6 849 328

## Description

L'invention concerne le domaine du verre renforcé thermiquement, semi-trempé ou trempé et propose une solution pour réduire le phénomène des iridescences indésirées affectant ce type de substrat verrier lorsque le refroidissement de renforcement thermique est administré par des buses soufflant de l'air.

Le refroidissement rapide d'un substrat verrier porté au-dessus de sa température de transition vitreuse lui confère des propriétés mécaniques particulières et bien connues de l'homme du métier. Notamment, le verre présente des propriétés mécaniques améliorées et un comportement à la casse caractéristique puisqu'il se fracture spontanément et totalement en une multitude de petits morceaux peu coupants.

Différents procédés de trempe ont été décrits comme la trempe chimique (voir notamment US8166778), la trempe thermique par contact selon laquelle le verre est refroidi par contact avec un moule froid (voir notamment EP667320), la trempe thermique dans un lit fluidisé de particules solides (voir US4113458), la trempe thermique « La Bastie » selon laquelle le verre est plongé dans des graisses ou huiles, ou la trempe thermique par soufflage d'air (voir notamment US2013255319). Pour la mise en oeuvre de ce dernier procédé, on peut utiliser des buses soufflant de l'air directement à la surface du verre chaud, généralement sur les deux surfaces principales du substrat verrier. Ce dernier procédé est relativement simple à mettre en oeuvre mais le verre final peut éventuellement présenter des iridescences plus ou moins forte selon l'angle de vision, les couches déposées sur le verre, le degré de trempe, le matériel utilisé, etc. Ces iridescences sont des colorations affectant la lumière réfléchie et trouvant probablement leur cause dans la structure du verre, notamment une répartition anisotrope de contraintes. Elles sont généralement non-désirées, qu'il s'agisse de verre automobile ou de verre pour le bâtiment. Ces iridescences paraissent représenter un fantôme du réseau de buses de soufflage utilisées.

Le WO2015019022 enseigne un substrat portant un revêtement fonctionnel et une couche de protection temporaire obtenue à partir d'une composition liquide comprenant des composés (méth)acrylates. La trempe de ce substrat est envisagée mais la technique de refroidissement n'est pas discutée.

On a maintenant trouvé un procédé permettant de réduire fortement les iridescences des substrats verriers renforcés thermiquement et dont le refroidissement du traitement de renforcement thermique a été réalisé par soufflage d'air par des buses. La notion de renforcement thermique recouvre celles de semi-trempe et de trempe.

Selon l'invention dans la revendication 1, on applique une couche comprenant un polymère, notamment un polymère d'un (méth)acrylate, en surface du substrat verrier avant de le chauffer puis de le refroidir pour le renforcer thermiquement. La couche comprenant le polymère disparaît lors du chauffage du traitement de renforcement thermique, notamment par dépolymérisation et/ou oxydation et c'est pourquoi on l'appelle couche temporaire. De façon surprenante, alors que la couche temporaire disparait lors du chauffage, et donc avant le soufflage d'air de refroidissement, la présence de la couche temporaire produit une forte diminution des iridescences constatées après refroidissement. On pense que la couche de polymère améliore l'homogénéité du chauffage du verre réduisant de ce fait l'anisotropie finale du substrat verrier.

Un matériau transparent possédant des contraintes résiduelles inhomogènes (c'est le cas des verres trempés ou durcis de l'art antérieur) ne transmet pas la lumière de manière identique en tout point de sa surface. On appelle cela la biréfringence. Celle-ci peut se mesurer par le retard optique qui correspond au déphasage d'une onde lumineuse entre son entrée et sa sortie du matériau transparent. Un retard optique élevé traduit une forte anisotropie. La réduction des iridescences peut ainsi être évaluée par la mesure du retard optique. Ces mesures peuvent être réalisées par la méthode décrite dans l'article de IIlguth, M., Schuler, M., Bucak, O., 2015, « The effect of optical anisotropies on building glass façades and its measurement method », Frontiers of Architectural Research 4, pp. 119-126. Une mesure par mm² de substrat verrier est réalisée, puis la moyenne arithmétique de toutes ces mesures est calculée. Les retards optiques sont mesurés avec une lumière polarisée circulaire.

Le renforcement thermique est appliqué aux substrats verrier par une technique bien connue de l'homme du métier faisant intervenir un chauffage suivi d'un soufflage d'air au travers de buses. Il peut s'agir d'une semi-trempe (générant une contrainte de surface du verre comprise dans le domaine allant de 40 et 90 MPa, en valeur absolue) ou d'une trempe (générant une contrainte de surface du verre supérieure à 90 MPa en valeur absolue). Le renforcement thermique est appliqué par refroidissement rapide et par soufflage d'air au travers de buses sur le substrat verrier préalablement chauffé. Le chauffage porte le substrat verrier au-dessus de la température de transition vitreuse Tg du verre telle que mesurée par dilatométrie. Généralement ce chauffage porte le substrat verrier à plus de 550°C, et généralement à plus de 590°C. Généralement, le chauffage est réalisé en-dessous de 720°C et plus généralement en-dessous de 700°C. Dans la majorité des cas le chauffage est réalisé autour de 620°C, selon la composition de verre et le degré de renforcement recherché. Plus le renforcement thermique est fort, plus la contrainte de surface provoquée est élevée. La contrainte de surface peut être déterminée par un appareil fonctionnant sur le principe de la polariscopie comme le polariscope Scalp-04, la valeur déterminée étant une moyenne de 5 mesures sur une surface principale de substrat verrier et à au moins 20 cm du bord. Les valeurs de contrainte de surface ci-dessus mentionnées sont des valeurs absolues, puisque l'homme du métier peut aussi les exprimer avec un signe négatif.

Dans le cadre de la présente demande, on appelle substrat verrier une feuille de verre ou une feuille de verre revêtue d'au moins une couche mince comme un revêtement fonctionnel, notamment du type bas-émissif ou contrôle solaire. Le terme feuille recouvre la notion de plaque. On appelle « substrat verrier renforcé thermiquement » les substrats verriers après application du procédé selon l'invention, c'est-à-dire après application du renforcement thermique (chauffage puis refroidissement). Le substrat verrier utilisé au départ du procédé selon l'invention n'est généralement pas renforcé thermiquement. Il peut être renforcé thermiquement, mais cela est inutile puisque sa qualité d'être renforcé thermiquement disparait dès le chauffage du traitement de renforcement selon l'invention.

Ainsi, l'invention selon la revendication 1 concerne un procédé de fabrication d'un substrat verrier renforcé thermiquement, comprenant
- l'application d'une couche comprenant un polymère, notamment un polymère d'un (méth)acrylate, dite couche temporaire, sur un substrat verrier comprenant une feuille de verre, puis
- l'application au substrat verrier revêtu de la couche temporaire d'un traitement de renforcement thermique du verre comprenant un chauffage menant à l'élimination de la couche temporaire, puis un refroidissement par soufflage d'air par des buses.

Le chauffage est généralement réalisé à une température supérieure à 550°C, voire supérieure à 590°C. Il est généralement réalisé à une température inférieure à 720°C et plus généralement inférieur à 700°C.

Généralement, le substrat verrier de départ comprend un revêtement fonctionnel entre le verre et la couche temporaire, le revêtement fonctionnel pouvant être du type bas-émissif ou du type contrôle solaire. Ce genre de revêtement peut être à l'origine d'une difficulté à chauffer le verre, ce qui renforce le caractère anisotrope des contraintes à l'intérieur du verre final. On constate que les substrats verrier revêtus d'un tel revêtement fonctionnel présentent, après renforcement thermique, des iridescences plus marquées qu'en l'absence de revêtement fonctionnel. Le procédé selon l'invention diminue drastiquement les iridescences de tels substrats verriers renforcés thermiquement. Sans que cette explication ne puisse procurer une limitation de la présente demande, il semble que la couche temporaire selon l'invention aide au chauffage homogène du substrat verrier grâce à sa haute émissivité. En cas de présence de revêtement fonctionnel, il contrecarre l'effet de celui-ci pendant l'étape de chauffage du traitement de renforcement thermique, réduisant de ce fait l'anisotropie de la répartition des contraintes et en conséquence l'importance des iridescences. La couche temporaire augmenterait ainsi l'émissivité de la surface du verre déjà revêtue du revêtement fonctionnel, ce dernier ayant par nature une émissivité basse. Ainsi, le substrat verrier revêtu de la couche temporaire présente une émissivité plus élevée que le même substrat verrier dépourvu de couche temporaire. Notamment, le substrat verrier présente, avant application de la couche temporaire, une émissivité normale inférieure à 10%, voire même inférieure à 5%.

Le revêtement fonctionnel comprend au moins une couche métallique, notamment comprenant de l'argent. Le revêtement fonctionnel peut comprendre un empilement de couches minces comportant une alternance de x couches métalliques, et de (x+1) revêtements antireflets, chaque couche métallique étant disposée entre deux revêtements antireflets. Un revêtement antireflet comprend au moins une couche diélectrique. Ainsi une couche diélectrique du revêtement antireflet du revêtement fonctionnel peut être en contact direct avec le verre. La valeur de x est supérieur ou égal à 1 et va généralement jusqu'à 4. Une couche métallique peut être en argent ou à base d'argent (plus de 50% en poids d'argent) ou être en alliage métallique contenant de l'argent. Une couche diélectrique au sens de la présente invention est en un matériau isolant électrique et « non métallique », et n'est donc pas un métal. Un matériau diélectrique est en un matériau comportant de l'oxygène et/ou de l'azote, introduit volontairement. Ce matériau présente un rapport n/k sur toute la plage de longueur d'onde du visible (de 380 nm à 780 nm) égal ou supérieur à 5, n désignant l'indice de réfraction réel du matériau à une longueur d'onde donnée et k représentant la partie imaginaire de l'indice de réfraction à une longueur d'onde donnée, le rapport n/k étant calculé à une longueur d'onde donnée identique pour n et pour k.

Les couches diélectriques des revêtements antireflets peuvent être choisies parmi les oxydes, nitrures oxynitrures d'un ou plusieurs éléments choisi(s) parmi le titane, le silicium, l'aluminium, le zirconium, le hafnium, l'étain et le zinc.

Notamment, la couche supérieure du revêtement fonctionnel comprend de préférence un nitrure ou oxyde ou oxynitrure de titane et/ou de zirconium et/ou d'hafnium, l'expression « couche supérieure » désignant la couche la plus éloignée du verre si le revêtement fonctionnel comprend plusieurs couches. Notamment, la couche supérieure peut être choisie parmi une couche de la liste suivante : nitrure de titane, nitrure de zirconium, nitrure d'hafnium, nitrure de titane et de zirconium, nitrure de titane et de zirconium et d'hafnium, oxyde de titane, oxyde de zirconium, oxyde d'hafnium, oxyde de titane et de zirconium, oxyde de titane et de zirconium et d'hafnium.

Le revêtement fonctionnel peut être déposé par tout moyen connu tel que par pulvérisation cathodique assistée par un champ magnétique, par évaporation thermique, par CVD ou PECVD, par pyrolyse, par dépôt par voie chimique, par voie sol-gel ou dépôt de couches inorganiques par voie humide.

Toutes les couches du revêtement fonctionnel peuvent être déposées par pulvérisation cathodique assistée par un champ magnétique. La couche de protection temporaire est avantageusement directement au contact du revêtement fonctionnel. Généralement, l'épaisseur du revêtement fonctionnel est :
- supérieure à 100 nm, de préférence supérieure à 150 nm,
- inférieure à 300 nm, de préférence inférieure à 250 nm.

Le renforcement thermique du verre implique un chauffage suivi d'un refroidissement par soufflage d'air au travers de buses, le soufflage étant généralement réalisé simultanément vers les deux faces principales du substrat verrier. Le refroidissement peut provoquer une semi-trempe ou une trempe. De préférence, le renforcement thermique est suffisant pour que la valeur absolue de la contrainte de surface de la feuille soit supérieure à 40 MPa, notamment supérieur à 90 MPa, notamment supérieure à 110 MPa notamment supérieure à 120 MPa (en valeur absolue). Généralement, la valeur absolue de la contrainte de surface de la feuille est inférieure à 250 MPa.

La couche temporaire peut être déposée sur une seule face principale ou sur chacune des faces principales du substrat verrier. Elle peut être déposée sur au moins un bord du substrat verrier. La couche temporaire est de préférence déposée à chaque endroit déjà revêtue d'un revêtement fonctionnel déjà décrit ci-dessus. Ainsi, la couche temporaire est généralement directement au contact du revêtement fonctionnel. Généralement, le substrat verrier comprend un revêtement fonctionnel sur une seule de ses faces principales et on applique la couche temporaire sur une seule des faces principales, celle comprenant déjà le revêtement fonctionnel.

La couche temporaire est essentiellement de nature organique. Elle est réalisée par application d'une composition liquide en une épaisseur supérieure à 1 micromètre sur le substrat verrier, suivi de sa solidification par polymérisation et/ou réticulation. Généralement, la composition liquide a une viscosité comprise entre 0,05 et 5 Pa.s lors de son application.

Le polymère, notamment polymère d'un (méth)acrylate, peut représenter au moins 90% de la masse de la couche temporaire. La couche temporaire peut comprendre une matière organique distincte du polymère pouvant disparaître lors du chauffage du traitement de renforcement thermique.

Un polymère d'un (méth)acrylate est formé à partir de la réaction entre eux de composés (méth)acrylates contenus dans la composition liquide. Les composés (méth)acrylates sont choisis parmi des monomères, des oligomères, des prépolymères ou des polymères comprenant au moins une fonction (méth)acrylate.

Par (méth)acrylate, on entend un acrylate ou un méthacrylate. On entend par « composés (méth)acrylate », les esters de l'acide acrylique ou méthacrylique comportant au moins une fonction acroyle (CH2=CH-CO-) ou méthacroyle (CH2=CH(CH3)-CO-). Ces esters peuvent être des monomères, des oligomères, des pré-polymères ou des polymères. Ces composés (méth)acrylate, lorsqu'ils sont soumis aux conditions de polymérisation, donnent un réseau polymère doté d'une structure solide.

Les composées (méth)acrylate utilisés peuvent être choisis parmi les (méth)acrylates monofonctionnels et polyfonctionnels tels que les
(méth)acrylates mono-, di-, tri-, poly-fonctionnels. Des exemples de tels monomères sont :
- les (méth)acrylates monofonctionnels tels que le méthyl(méth)acrylate, éthyl(méth)acrylate, n- ou ter-butyl(méth)acrylate, hexyl(méth)acrylate, cyclohexyl(méth)acrylate, 2-éthylhexyl(méth)acrylate, benzyl(méth)acrylate, 2-éthoxyethyl(méth)acrylate, phenyloxyethyl(méth)acrylate, hydroxyethylacrylate, hydroxypropyl(méth)acrylate, vinyl(méth)acrylate caprolactone acrylate, isobornyl méthacrylate, lauryl méthacrylate, polypropylène glycol monométhacrylate,
- les (méth)acrylates difonctionnels tels que 1,4-butanediol di(méth)acrylate, éthylène diméthacrylate, 1,6-hexandiol di(méth)acrylate, bisphénol A di(méth)acrylate, triméthylolpropane diacrylate, triéthylène glycol diacrylate, éthylène glycol di(méth)acrylate, polyéthylène glycol di(méth)acrylate, le tricyclodécane diméthanol diacrylate,
- les (méth)acrylates trifonctionnels tels que triméthylolpropane triméthacrylate, triméthylolpropane triacrylate, pentaérythritol triacrylate, ethoxylated trimethylolpropane triacrylate, trimethylolpropane triméthacrylate, tripropylène glycol triacrylate,
- les (méth)acrylate de fonctionnalité supérieure tels que pentaérythritol tétra(méth)acrylate, ditriméthylpropane tétra(méth)acrylate, dipentaérythritol penta(méth)acrylate ou hexa(méth)acrylate.

De préférence, la couche temporaire ne comprend pas de matière minérale comme une charge ou un pigment. La couche temporaire ne comprend pas non plus d'additif non susceptibles d'être éliminé lors du chauffage dans le cadre du renforcement thermique tels que par exemple un composé organique comprenant du silicium de type siloxane. La couche temporaire présente en effet la propriété de disparaître totalement à la température du chauffage dans le cadre du traitement de renforcement thermique et elle ne doit donc rien contenir qui ne puisse disparaisse lors de ce chauffage.

La couche temporaire présente généralement une épaisseur supérieure à 1 micromètre et de préférence supérieure à 5 micromètres. Elle présente généralement une épaisseur inférieure à 100 micromètres, de préférence inférieure à 50 micromètres. Son épaisseur est généralement comprise entre 2 et 100 micromètres, et même entre 5 et 50 micromètres, notamment entre 10 et 30 micromètres. La couche temporaire présente généralement un grammage compris entre 5 et 50 g/m², de préférence entre 10 et 30 g/m². Plus la couche temporaire est épaisse, plus elle augmente l'émissivité du substrat verrier. On la met donc en épaisseur suffisante pour que l'émissivité du substrat verrier soit supérieure à celle du même substrat verrier sans couche temporaire.

Pour son application, la composition liquide comprend avantageusement moins de 20%, et de préférence moins de 10% en masse de solvant par rapport à la masse totale de la composition liquide, voire est exempte de solvant. Elle présente de préférence une viscosité mesurée à 25 °C d'au moins 0,05 Pa.s, voire d'au moins 0,08 Pa.s, voire d'au moins 0,1 Pa.s, voire d'au moins 0,50 Pa.s. Sa viscosité mesurée à 25 °C est généralement d'au plus 5 Pa.s, voire d'au plus 2 Pa.s.

La composition liquide comprend généralement au moins un initiateur de polymérisation, de préférence un photoinitiateur, ledit initiateur représentant généralement 0,1 à 20 %, voire 1 à 15 %, de préférence 5 à 15 % et mieux 8 à 12 % de la masse totale des composés (méth)acrylates. La nature de l'initiateur est fonction du type de durcissement choisi. Par exemple, en cas de durcissement thermique, on utilise des initiateurs de type peroxyde de benzoyle. En cas de durcissement par rayonnement UV, on utilise des initiateurs dits photoinitiateurs. La composition liquide peut comprendre en outre au moins un additif choisi parmi les plastifiants, les absorbeurs, les agents de séparation, les stabilisants à la chaleur et/ou à la lumière, les agents épaississants ou les modificateurs de surface, la somme de tous les additifs étant généralement comprise entre 0 et 5 % de la masse de la composition liquide. Les initiateurs de polymérisation ne sont pas considérés comme des additifs.

De préférence, les composés (méth)acrylates sont choisis parmi les esters de l'acide acrylique ou méthacrylique comportant au moins deux fonctions acroyle (CH2=CH-CO-) ou méthacroyle (CH2=CH(CH3)-CO-). De préférence, la composition liquide comprend en masse par rapport à la masse totale des composés (méth)acrylates, par ordre de préférence croissant, au moins 50 %, au moins 60 %, au moins 70 %, au moins 80 %, au moins 90 %, 100 % de composés (méth)acrylates choisis parmi les esters de l'acide acrylique ou méthacrylique comportant au moins deux fonctions acroyle (CH2=CH-CO-) ou méthacroyle (CH2=CH(CH3)-CO-),

De préférence, la composition liquide comprend en masse par rapport à la masse totale des composés (méth)acrylates :
- 30 à 80 % en masse d'au moins un oligomère uréthane-acrylique aliphatique,
- 20 à 70 % en masse d'au moins au moins un monomère (méth)acrylate choisi parmi un (méth)acrylate mono, bi, tri fonctionnel.

La composition liquide peut comprendre :
- au moins un oligomère uréthane-acrylique aliphatique,
- au moins un monomère (méth)acrylate choisi parmi les monomères (méth)acrylates mono, bi, tri-fonctionnel,
- au moins un initiateur de polymérisation.

La composition liquide peut comprendre :
- au moins un oligomère uréthane-acrylique aliphatique,
- au moins un monomère (méth)acrylate difonctionnel,
- au moins un monomère (méth)acrylate trifonctionnel,
- au moins un initiateur de polymérisation, de préférence un photoinitiateur.

La composition liquide peut être appliquée à température ambiante par tout moyen connu et notamment par enduction au rouleau, par aspersion, par trempage, par enduction au rideau, ou par pistoletage. La composition liquide est préférentiellement appliquée par enduction au rouleau. La vitesse de dépôt de la composition liquide peut être comprise entre 1 et 90 m/min.

La couche temporaire peut être durcie :
- par séchage à une température inférieure à 200°C pendant une durée allant par exemple de 10 s à 180 s,
- par réticulation UV (différentes longueurs d'onde) de préférence à l'air libre et à température ambiante ou
- par faisceau d'électrons.

Le substrat verrier de départ, de même que le substrat verrier final (renforcé thermiquement) peut avoir une épaisseur comprise dans le domaine allant de 1 à 20 mm, et plus particulièrement comprise dans le domaine allant de 2 à 10 mm.

La couche temporaire peut être déposée sur le substrat verrier avant ou après une étape de découpe, c'est-à-dire dans ce dernier cas sur un substrat verrier à la taille finale ou proche de la taille finale du substrat verrier renforcé thermiquement.

En plus de son effet bénéfique pour réduire l'anisotropie du substrat verrier renforcé thermiquement, la couche de polymère protège un éventuel revêtement fonctionnel de l'oxydation et des sollicitations mécaniques pouvant intervenir lors de son convoyage.

L'invention concerne également une ligne de fabrication de substrats verriers renforcés thermiquement à partir de substrats verriers comprenant une feuille de verre, comprenant dans l'ordre suivant :
- un dispositif d'application sur les substrats verriers d'une couche temporaire comprenant un polymère,
- un dispositif de chauffage des substrats verriers revêtus de la couche temporaire,
- un dispositif de soufflage d'air par des buses sur les substrats verriers chauffés,
- des moyens de convoyage des substrats verriers du premier au dernier dispositif de la ligne.

Dans le cas où la couche temporaire comprend un polymère d'un (méth)acrylate, le dispositif de dépôt d'une couche temporaire comprend
- un dispositif de dépôt d'une couche d'une composition liquide comprenant des composés (méth)acrylates sur les substrats verriers,
- un dispositif de solidification par polymérisation et/ou réticulation des composés (méth)acrylates menant à la couche temporaire sur les substrats verriers.

Généralement, les moyens de convoyage des substrats verriers comprennent un lit de rouleaux sur lesquels les substrats verriers défilent les uns derrière les autres. Ce lit de rouleau traverse le four de chauffage et le dispositif de soufflage d'air par des buses. Des buses soufflent de l'air au travers du lit de rouleau vers la face tournée vers le bas des substrats verriers et vers la face tournée vers le haut des substrats verriers. Le dispositif de soufflage d'air par des buses comprend des buses disposées au-dessus et au-dessous du lit de rouleau afin de souffler de l'air vers les deux faces principales des substrats verriers.

La ligne de fabrication peut comprendre un dispositif de dépôt d'un revêtement fonctionnel avant le dispositif de dépôt d'une couche d'une composition liquide. Il peut s'agir d'un dispositif de pulvérisation cathodique assistée par un champ magnétique.

Notamment, le dispositif de dépôt d'une composition liquide peut comprendre un dispositif d'enduction au rouleau. Notamment, le dispositif de réticulation peut comprendre une lampe UV. Notamment, le la ligne de fabrication peut comprendre un dispositif de découpe des substrats verriers entre le dispositif de réticulation et le dispositif de chauffage.

L'invention mène à des substrats verriers pouvant arborer des iridescences de façon réduite. L'invention permet notamment la réalisation d'une feuille de verre renforcée thermiquement et comprenant une contrainte de surface supérieure à 40 MPa, voire supérieure à 90 MPa et comprenant des iridescences visibles à l'œil nu et dont la moyenne arithmétique du retard optique mesuré avec une lumière polarisée circulaire est inférieure à 50 nm. Notamment, cette feuille peut comprendre sur une de ses faces principales un revêtement fonctionnel, notamment de contrôle solaire et comprenant au moins une couche métallique, ledit revêtement étant d'épaisseur comprise entre 100 et 300 nm. Notamment, la feuille de verre renforcée thermiquement a une forte proportion de sa surface présentant un retard optique inférieur à 50nm. Cette proportion est supérieur à 60% voire même supérieur à 70%.

### Exemples 1 et 2

On prend deux feuilles de verre d'épaisseur 6 mm et de dimension 800mm x 600mm de marque Saint Gobain Glass CoolLite154 II. Ces deux feuilles présentaient sur une de leurs faces principales un revêtement fonctionnel du type contrôle solaire fait d'un empilement de couches minces comportant successivement à partir du verre une alternance de deux couches d'argent et de trois revêtements antireflets, chaque revêtement antireflet comportant plusieurs couches diélectriques dont une en Si₃N₄ et une en ZnO, de manière à ce que chaque couche d'argent soit disposée entre deux revêtements antireflet. L'épaisseur totale de ce revêtement fonctionnel est comprise entre 150 et 200 nm.

Sur l'une des feuilles, on applique une couche temporaire directement sur le revêtement fonctionnel de la façon suivante :
Une composition liquide a été réalisée avec des mélanges d'oligomères et de monomères comprenant au moins une fonction acrylate commercialisés par la société Sartomer :
- CN9276 : oligomère uréthane-acrylate aliphatique tétra-fonctionnel,
- SR351 : triméthylolpropane triacrylate, monomère acrylate tri-fonctionnel,
- SR833S : tricyclodécane diméthanol diacrylate, monomère acrylate di-fonctionnel.

La présence de l'oligomère uréthane-acrylate permet de moduler les propriétés de dureté et de souplesse de la couche de protection temporaire. La couche de protection temporaire est ensuite durcie par réticulation aux UV. L'Irgacure 500 commercialisé par BASF, en tant qu'initiateur de polymérisation est ajouté à la composition liquide. Les acrylates et l'initiateur étaient présents dans la composition liquide dans les proportions suivantes données en parties en masse :

**Tableau 1**

| | |
|---|---|
| oligomère acrylate CN9276 | 60 |
| tri-fonctionnel acrylate SR351 | 20 |
| di-fonctionnel acrylate SR833S | 20 |
| Initiateur Irgacure 500 | 5 |

La composition liquide avait une viscosité à 25 °C de 1,08 Pa.s et a été appliquée sur le substrat verrier par enduction au rouleau. Une épaisseur comprise entre 10 et 20 µm est obtenue en utilisant des vitesses pour le rouleau applicateur comprises entre 15 et 25 m/min. La couche temporaire est durcie par un rayonnement UV fourni par une lampe à mercure de puissance 120 W. Dans ces conditions, la polymérisation du mélange de monomères et d'oligomères est obtenue dans la gamme d'épaisseur de 10 à 20 µm.

L'émissivité du substrat verrier sans couche de polymère (exemple 1, comparatif) était de 2,52%. L'émissivité du substrat verrier avec la couche de polymère (exemple 2, selon l'invention) était de 56,9%. L'émissivité est l'émissivité normale (au sens de perpendiculaire) mesurée par la norme EN12898 de janvier 2001.

On réalise un renforcement thermique de ces deux feuilles en leur appliquant un chauffage à 600°C suivi d'un refroidissement rapide par soufflage d'air par des buses soufflant sur les deux faces principales des deux feuilles. La compression de surface est ensuite mesurée à 60 MPa.

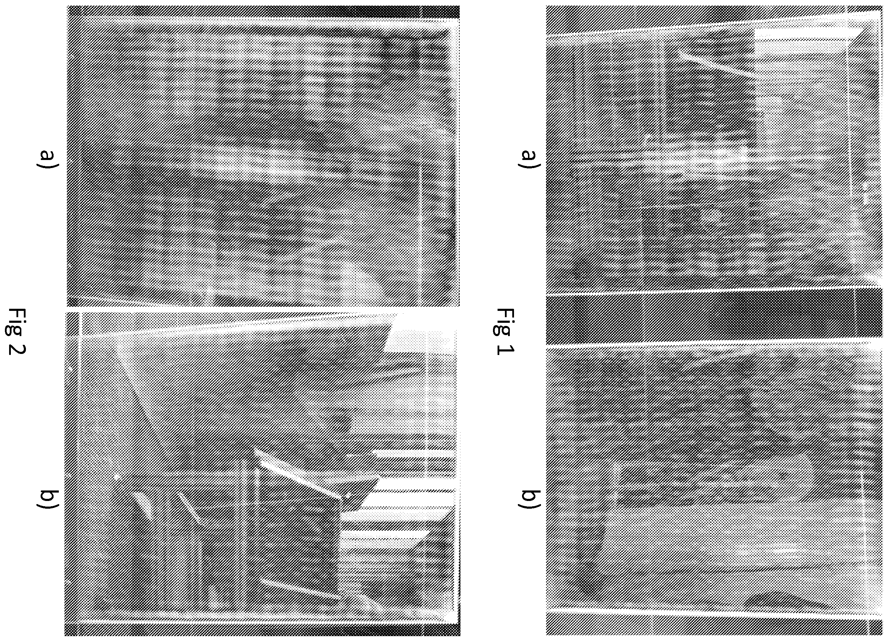

On observe ensuite ces substrats avec un polariscope circulaire (les substrats sont placés entre deux filtres polarisant). La figure 1 montre ces deux substrats. En a), le substrat qui n'avait pas reçu la couche temporaire (exemple 1) présente une forte marque blanche en zone centrale.

On a mesuré la moyenne arithmétique des retards optiques de ces deux feuilles par la méthode décrite dans l'article de IIlguth, M., Schuler, M., Bucak, O., 2015, « The effect of optical anisotropies on building glass façades and its measurement method », Frontiers of Architectural Research 4, pp. 119-126. Une mesure par mm² a été réalisée, puis la moyenne arithmétique a été calculée. Les retards optiques ont été mesurés avec une lumière polarisée circulaire. Les résultats sont rassemblés dans le tableau 2.

**Tableau 2**

| | Moyenne retard optique | % de surface avec retard optique < 50 nm |
|---|---|---|
| Ex 1 (sans couche polymère) | 56,6 | 50% |
| Ex 2 (avec couche polymère) | 33,2 | 80% |

### Exemples 3 et 4

On procède comme pour les exemples 1 et 2 sauf que le renforcement thermique est plus intense en raison d'un refroidissement plus rapide et mène à une compression de surface de 110 MPa et que l'observation est simplement réalisée en réflexion à l'œil nu. La figure 2 montre ces deux substrats. En a), le substrat n'avait pas reçu la couche temporaire et en b) le substrat avait reçu la couche temporaire. Le substrat n'ayant pas reçu la couche temporaire montre des iridescences beaucoup plus marquées.

## Revendications

1. Procédé de fabrication d'un substrat verrier renforcé thermiquement, comprenant
- l'application d'une couche comprenant un polymère, dite couche temporaire, sur un substrat verrier comprenant une feuille de verre, le substrat verrier comprenant un revêtement fonctionnel comprenant au moins une couche métallique, la couche temporaire étant appliquée sur le revêtement fonctionnel, la couche temporaire ayant une épaisseur comprise entre 1 et 100 micromètres puis
- l'application au substrat verrier revêtu de la couche temporaire d'un traitement de renforcement thermique du verre comprenant un chauffage menant à l'élimination de la couche temporaire, puis un refroidissement par soufflage d'air au travers de buses,
l'émissivité normale du substrat revêtu de la couche temporaire est supérieure à l'émissivité normale du substrat avant application de la couche temporaire,
le pourcentage de la surface de la feuille de verre présentant un retard optique inférieur à 50nm est supérieur à 60%.

2. Procédé selon la revendication précédente, **caractérisé en ce que** le chauffage est réalisé à une température supérieure à 550°C, voire supérieure à 590°C.

3. Procédé selon l'une des revendications précédentes, **caractérisé en ce que** le substrat verrier présente, avant application de la couche temporaire, une émissivité normale inférieure à 10%, voire même inférieure à 5%.

4. Procédé selon l'une des revendications précédentes, **caractérisé en ce que** la couche temporaire a une épaisseur comprise entre 5 et 50 micromètres.

5. Procédé selon la revendication précédente, **caractérisé en ce que** le revêtement fonctionnel est du type bas-émissif ou du type contrôle solaire.

6. Procédé selon l'une des deux revendications précédentes **caractérisé en ce que** le revêtement fonctionnel est déposé par pulvérisation cathodique assistée par un champ magnétique et **en ce que** la couche temporaire est directement au contact du revêtement fonctionnel.

7. Procédé selon l'une des trois revendications précédentes, **caractérisé en ce que** le revêtement fonctionnel comprend au moins une couche métallique, notamment comprenant de l'argent.

8. Procédé selon la revendication précédente **caractérisé en ce que** le revêtement fonctionnel comprend un empilement de couches minces comportant une alternance de x couches métalliques à base d'argent ou d'alliage métallique contenant de l'argent, et de (x+1) revêtements antireflets, chaque revêtement antireflet comportant au moins une couche diélectrique, chaque couche métallique étant disposée entre deux revêtements antireflets, x étant supérieur ou égal à 1.

9. Procédé selon l'une des revendications 1 à 8, **caractérisé en ce que** le revêtement fonctionnel comprend une couche supérieure choisie parmi les nitrures, oxydes ou oxy-nitrures de titane et/ou de zirconium et/ou d'hafnium notamment choisie parmi
le nitrure de titane, le nitrure de zirconium, le nitrure d'hafnium, le nitrure de titane et de zirconium, le nitrure de titane et de zirconium et d'hafnium, l'oxyde de titane, l'oxyde de zirconium, l'oxyde d'hafnium, l'oxyde de titane et de zirconium, l'oxyde de titane et de zirconium et d'hafnium.

10. Procédé selon l'une des revendications précédentes, **caractérisé en ce que** le refroidissement produit une contrainte de surface du verre supérieure à 40 MPa.

11. Procédé selon la revendication précédente **caractérisé en ce que** le refroidissement est une trempe thermique produisant une contrainte de surface supérieure à 90 MPa.

12. Procédé selon l'une des revendications précédentes, **caractérisé en ce que** le polymère est un polymère d'un (méth)acrylate.

13. Procédé selon la revendication précédente, **caractérisé en ce qu'**il comprend:
la préparation d'une composition liquide comprenant des composés (méth)acrylates choisis parmi des monomères, des oligomères, des prépolymères ou des polymères comprenant au moins une fonction (méth)acrylate, puis
l'application de la composition liquide sur le substrat verrier, puis
la solidification par polymérisation et/ou réticulation de la composition de façon à former la couche temporaire.

14. Procédé selon la revendication précédente **caractérisé en ce que** la composition liquide comprend moins de 20% en masse de solvant et a une viscosité comprise entre 0,05 et 5 Pa.s à son application.

15. Procédé selon l'une des revendications précédentes **caractérisé en ce qu'**il comprend une étape de découpe du substrat verrier entre l'application de la couche temporaire et le chauffage.

16. Procédé selon l'une des revendications précédentes **caractérisé en ce que** le pourcentage de sa surface présentant un retard optique inférieur à 50nm est supérieur à 70%.

17. Procédé selon l'une des revendications précédentes **caractérisé en ce que** le revêtement est d'épaisseur comprise entre 100 et 300nm.

## Patentansprüche

1. Verfahren zum Herstellen eines thermisch verstärkten Glassubstrats, umfassend:
- Aufbringen einer ein Polymer umfassenden Schicht, die als temporäre Schicht bezeichnet wird, auf ein Glassubstrat, umfassend eine Glasscheibe, wobei das Glassubstrat eine Funktionsbeschichtung umfasst, umfassend mindestens eine Metallschicht, wobei die temporäre Schicht auf die Funktionsbeschichtung aufgebracht wird, wobei die temporäre Schicht eine Dicke zwischen 1 und 100 Mikrometern besitzt, dann
- Aufbringen einer thermischen Verstärkungsbehandlung des Glases auf das mit der temporären Schicht beschichtete Glassubstrat, umfassend ein Erhitzen, das zu der Entfernung der temporären Schicht führt, dann Abkühlen durch Einblasen von Luft über Düsen,
wobei das normale Emissionsvermögen des mit der temporären Schicht beschichteten Substrats größer als das normale Emissionsvermögen des Substrats vor dem Aufbringen der temporären Schicht ist,
der Anteil der Oberfläche der Glasscheibe, der eine optische Verzögerung von weniger als 50 nm aufweist, größer als 60 % ist.

2. Verfahren nach dem vorstehenden Anspruch,
**dadurch gekennzeichnet, dass** das Erhitzen bei einer Temperatur von mehr als 550 °C oder sogar mehr als 590 °C durchgeführt wird.

3. Verfahren nach einem der vorstehenden Ansprüche,
**dadurch gekennzeichnet, dass** das Glassubstrat vor dem Aufbringen der temporären Schicht ein normales Emissionsvermögen von weniger als 10 % oder sogar weniger als 5 % aufweist.

4. Artikel nach einem der vorstehenden Ansprüche,
**dadurch gekennzeichnet, dass** die temporäre Schutzschicht eine Dicke zwischen 5 und 50 Mikrometern besitzt.

5. Verfahren nach dem vorstehenden Anspruch,
**dadurch gekennzeichnet, dass** es sich bei der Funktionsbeschichtung um den Typ mit geringer Emission oder den Sonnenschutztyp handelt.

6. Verfahren nach einem der zwei vorstehenden Ansprüche,
**dadurch gekennzeichnet, dass** die Funktionsbeschichtung durch Kathodenzerstäubung, unterstützt durch ein Magnetfeld, aufgebracht wird und **dass** die temporäre Schutzschicht direkt mit der Funktionsbeschichtung in Kontakt steht.

7. Verfahren nach einem der drei vorstehenden Ansprüche,
**dadurch gekennzeichnet, dass** die Funktionsbeschichtung mindestens eine Metallschicht, insbesondere umfassend Silber, umfasst.

8. Verfahren nach dem vorstehenden Anspruch,
**dadurch gekennzeichnet, dass** die Funktionsbeschichtung eine Stapelung von Dünnschichten umfasst, der einen Wechsel von x Metallschichten auf Basis von Silber oder einer silberhaltigen Metalllegierung und (x+1) Antireflexbeschichtungen vorweist, wobei jede Antireflexbeschichtung mindestens eine dielektrische Schicht vorweist, wobei jede Metallschicht zwischen zwei Antireflexbeschichtungen angeordnet ist, wobei x größer als oder gleich 1 ist.

9. Verfahren nach einem der Ansprüche 1 bis 8,
**dadurch gekennzeichnet, dass** die Funktionsbeschichtung eine obere Schicht umfasst, die aus Nitriden, Oxiden oder Oxynitriden von Titan und/oder Zirkonium und/oder Hafnium ausgewählt ist, insbesondere aus Titannitrid, Zirkoniumnitrid, Hafniumnitrid, Titan- und Zirkoniumnitrid, Titan- und Zirkonium- und Hafniumnitrid, Titanoxid, Zirkoniumoxid, Hafniumoxid, Titan- und Zirkoniumoxid, Titan- und Zirkonium- und Hafniumoxid, ausgewählt ist.

10. Verfahren nach einem der vorstehenden Ansprüche,
**dadurch gekennzeichnet, dass** das Abkühlen eine Oberflächenspannung des Glases von mehr als 40 MPa erzeugt.

11. Verfahren nach dem vorstehenden Anspruch,
**dadurch gekennzeichnet, dass** das Abkühlen ein thermisches Abschrecken ist, das eine Oberflächenspannung von mehr als 90 MPa erzeugt.

12. Verfahren nach einem der vorstehenden Ansprüche,
**dadurch gekennzeichnet, dass** das Polymer ein Methacrylatpolymer ist.

13. Verfahren nach dem vorstehenden Anspruch,
**dadurch gekennzeichnet, dass** es umfasst:
das Herstellen einer flüssigen Zusammensetzung, umfassend (Meth)acrylatverbindungen, die aus Monomeren, Oligomeren, Präpolymeren oder Polymeren ausgewählt sind, umfassend mindestens eine (Meth)acrylatfunktion, dann
Aufbringen der flüssigen Zusammensetzung auf das Glassubstrat, dann
Verfestigen durch Polymerisation und/oder Vernetzung der Zusammensetzung, um die temporäre Schicht auszubilden.

14. Verfahren nach dem vorstehenden Anspruch,
**dadurch gekennzeichnet, dass** die flüssige Zusammensetzung zu weniger als 20 Masse-% Lösungsmittel umfasst und bei ihrem Auftragen eine Viskosität zwischen 0,05 und 5 Pa.s besitzt.

15. Verfahren nach einem der vorstehenden Ansprüche,
**dadurch gekennzeichnet, dass** es einen Schritt eines Schneidens des Glassubstrats zwischen dem Aufbringen der temporären Schicht und dem Erhitzen umfasst.

16. Verfahren nach einem der vorstehenden Ansprüche,
**dadurch gekennzeichnet, dass** der Anteil seiner Oberfläche, der eine optische Verzögerung von weniger als 50 nm aufweist, größer als 70 % ist.

17. Verfahren nach einem der vorstehenden Ansprüche,
**dadurch gekennzeichnet, dass** die Beschichtung eine Dicke zwischen 100 und 300 nm hat.

## Claims

1. A process for the manufacture of a heat strengthened glass substrate, comprising:
- the application of a layer comprising a polymer, a "temporary layer", on a glass substrate comprising a glass sheet, the glass substrate comprising a functional coating comprising at least one metallic layer, the temporary layer being applied on the functional coating, the temporary layer having a thickness of between 1 and 100 micrometers, then
- the application to the glass substrate coated with the temporary layer of a treatment for the heat strengthening of the glass comprising heating, leading to the removal of the temporary layer, and then cooling by blowing of air through nozzles.
the normal emissivity of the substrate coated with the temporary layer is greater than the normal emissivity of the substrate before application of the temporary layer,
the percentage of the glass substrate surface area exhibiting a retardation of less than 50 nm is greater than 60%.

2. The process as claimed in the preceding claim, **characterized in that** the heating is carried out at a temperature of greater than 550°C, indeed even of greater than 590ºC.

3. The process as claimed in either of the preceding claims, **characterized in that** the glass substrate exhibits, before application of the temporary layer, a normal emissivity of less than 10%, indeed even of less than 5%.

4. The process as claimed in one of the preceding claims, characterized that the temporary layer has a thickness of between 5 and 50 micrometers.

5. The process as claimed in the preceding claim, **characterized in that** the functional coating is of the low-e type or of the solar control type.

6. The process as claimed in either of the two preceding claims, **characterized in that** the functional coating is deposited by cathode sputtering assisted by a magnetic field and **in that** the temporary layer is directly in contact with the functional coating.

7. The process as claimed in one of the three preceding claims, **characterized in that** the functional coating comprises at least one metal layer, in particular comprising silver.

8. The process as claimed in the preceding claim, **characterized in that** the functional coating comprises a stack of thin layers comprising an alternation of x metal layers based on silver or on a metal alloy containing silver and of (x+1) antireflective coatings, each antireflective coating comprising at least one dielectric layer, each metal layer being positioned between two antireflective coatings, x being greater than or equal to 1.

9. The process as claimed in one of claims 1 to 8, **characterized in that** the functional coating comprises an upper layer chosen from nitrides, oxides or oxinitrides of titanium and/or of zirconium and/or of hafnium, in particular chosen from:
titanium nitride, zirconium nitride, hafnium nitride,
titanium zirconium nitride, titanium zirconium hafnium nitride,
titanium oxide, zirconium oxide, hafnium oxide, titanium zirconium oxide or titanium zirconium hafnium oxide.

10. The process as claimed in one of the preceding claims, **characterized in that** the cooling produces a surface stress of the glass of greater than 40 MPa.

11. The process as claimed in the preceding claim, **characterized in that** the cooling is a heat tempering producing a surface stress of greater than 90 MPa.

12. The process as claimed in one of the preceding claims, **characterized in that** the polymer is a polymer of a (meth)acrylate.

13. The process as claimed in the preceding claim, **characterized in that** it comprises:
the preparation of a liquid composition comprising (meth)acrylate compounds chosen from monomers, oligomers, prepolymers or polymers comprising at least one (meth)acrylate functional group,
the application of the liquid composition on the glass substrate, then
the solidification, by polymerization and/or crosslinking, of the composition, so as to form the temporary layer.

14. The process as claimed in the preceding claim, **characterized in that** the liquid composition comprises less than 20% by weight of solvent and has a viscosity of between 0.05 and 5 Pa.s at its application.

15. The process as claimed in one of the preceding claims, **characterized in that** it comprises a stage of cutting up the glass substrate between the application of the temporary layer and the heating.

16. The process as claimed in one of the preceding claims, **characterized in that** the percentage of its surface area exhibiting a retardation of less than 50 nm is greater than 70%.

17. The process as claimed in one of the preceding claims, **characterized in that** the coating has a thickness of between 100 and 300 nm.
